# EUROPEAN PATENT APPLICATION

(11) **EP 3 552 803 A1**
(43) Date of publication of application: **16.10.2019**
(21) Application number: 18167379.9
(22) Date of filing: 13.04.2018
(51) Int. Cl.: B29C 64/153, B33Y 10/00, B33Y 30/00, B22F 3/105

(54) **METHOD FOR ADDITIVELY MANUFACTURING AT LEAST ONE THREE-DIMENSIONAL OBJECT**

(71) Applicant: CL Schutzrechtsverwaltungs GmbH, 96215 Lichtenfels (DE)
(72) Inventor: Hofmann, Alexander, 96260 Weismain (DE); Winiarski, Daniel, 96231 Bad Staffelstein (DE)
(74) Representative: Hafner & Kohl

(57) **Abstract**

Method for additively manufacturing at least one three-dimensional object (2) by means of successive layerwise selective irradiation and consolidation of build material layers (3) applied in a build plane (BP) of an apparatus (1) for additively manufacturing three-dimensional objects (2) by means of at least one energy beam (5), wherein at least one build material layer (3) which is to be selectively irradiated and consolidated by means of the energy beam (5) comprises at least one build material layer section (11) having a curved shape with respect to at least one extension direction of the build material layer (3).

## Description

The invention relates to a method for additively manufacturing at least one three-dimensional object by means of successive layerwise selective irradiation and consolidation of build material layers applied in a build plane of an apparatus for additively manufacturing three-dimensional objects by means of at least one energy beam.

Respective methods for additively manufacturing at least one three-dimensional object, which may be implemented as selective electron beam melting processes or selective laser melting processes, for instance, are generally known from the technical field of additive manufacturing.

Thereby, it is observed that additively manufactured objects by means of known additive manufacturing processes, e.g. selective laser melting processes, oftentimes comprise anisotropic structural properties, i.e. particularly anisotropic mechanical properties, which are explained by the nature of respective additive manufacturing processes, i.e. the successive layerwise selective irradiation and consolidation of build material layers.

Respective anisotropic structural and mechanical properties of the additively manufactured three-dimensional objects may result in mechanical properties which vary in different spatial directions. As an example, an additively manufactured component may have a different tensile strength, compressive strength and/or shear strength in different spatial directions.

Since it is generally desirable to additively manufacture three-dimensional objects having isotropic structural properties, i.e. particularly isotropic mechanical properties, there exists a need for further development of additive manufacturing processes so that the three-dimensional objects which can be manufactured have isotropic structural properties.

It is the object of the invention to provide a method for additively manufacturing at least one three-dimensional object allowing for additively manufacturing three-dimensional objects having isotropic structural properties, i.e. particularly isotropic mechanical properties.

This object is achieved by a method for additively manufacturing at least one three-dimensional object according to Claim 1. The claims depending on Claim 1 relate to possible embodiments of the method according to Claim 1.

The method described herein is a method for additively manufacturing at least one three-dimensional object, e.g. a technical component, by means of successive layerwise selective irradiation and consolidation of build material layers by means of at least one energy beam. The build material may be a ceramic, polymer, or metal; the build material is typically, provided as a powder. The energy beam may be an electron or laser beam, for instance. The build material layers which are to be selectively irradiated and consolidated are successively applied in a build plane of an apparatus for additively manufacturing at least one three-dimensional object which is used for performing the method. The method is thus, performable or performed by an apparatus for additively manufacturing at least one three-dimensional object.

The method may be implemented as a selective laser sintering method, a selective laser melting method, or a selective electron beam melting method, for instance. Yet, it is also conceivable that the method is a binder jetting method, particularly a metal binder jetting method, for instance. The apparatus for performing the method may thus, be embodied as a selective laser sintering apparatus, a selective laser melting apparatus, or a selective electron beam melting apparatus, for instance. Yet, it is also conceivable that the apparatus is embodied as a binder jetting apparatus, particularly a metal binder jetting apparatus, for instance.

According to the method, at least one build material layer which is to be selectively irradiated and consolidated by means of the energy beam in accordance with the method described herein comprises at least one build material layer section having a curved shape with respect to at least one extension direction of the build material layer. In other words, at least one build material layer which is to be selectively irradiated and consolidated in accordance with the method is applied in such a manner that the build material layer comprises at least one build material layer section having a curved shape and/or curved extension with respect to at least one direction of extension of the build material layer. Hence, a build material layer may comprise at least one build material layer section having a curved shape or extension and at least one build material layer section having an even shape or extension. In either case, the term "curved" embraces all kinds of shapes, e.g. arc or arc-like shapes, wavy or wave-like shapes, ramp or ramp-like shapes, which are elevating or elevated and/or lowering or lowered in at least one direction of extension of the respective build material layer. For the exemplary case of only one respective build material layer section having a curved shape and/or curved extension with respect to at least one direction of extension of the build material layer, a respective build material layer may have an arc or arc-like shape or a dome or dome-like shape, respectively.
Compared with known additive manufacturing processes in which the build material is applied so as to form even, i.e. essentially two-dimensional, build material layers, the method described herein suggests concertedly applying build material so as to form curved, i.e. essentially three-dimensional, build material layers. Thus, at least one, a plurality of, or all build material layers applied in accordance with the method described herein are not applied as build material layers of an even two-dimensional layer geometry, but applied as build material layers of an uneven curved three-dimensional layer geometry.

Applying the build material so as to form build material layers comprising at least one build material layer section having a curved shape, does not (necessarily) mean that the three-dimensional object which is to be additively manufactured has a curved shape since the first build material layer (bottom layer with respect to the three-dimensional object which is to be additively manufactured) and the last build material layer (top layer with respect to the three-dimensional object which is to be additively manufactured) of a plurality of build material layers - the number of build material layers is typically, determined on basis of the geometrical dimensions, particularly the height, of the three-dimensional object which is to additively manufactured - which are required for completing a build job for manufacturing a respective three-dimensional object, may each be an even build material layer.

As will be apparent from below, respective curved build material layer sections of respective build material layers allow for forming an interlocking build material layer structure allowing for an interlocking engagement of vertically adjacently disposed build material layers which significantly improves the structural properties and mechanical properties, respectively of the three-dimensional objects which have been additively manufactured in accordance with the method described herein. The structural and mechanical properties, respectively are particularly improved in terms of isotropic structural and mechanical properties of three-dimensional objects which have been additively manufactured in accordance with the method described herein.

The or at least one respective curved shape build material layer section may comprise at least one elevating or elevated portion, particularly at least one portion which elevates and/or is elevated relative to a, particularly horizontal, reference level or plane, and/or at least one lowering or lowered portion, particularly at least one lowering or lowered portion which lowers and/or is lowered relative to the, particularly horizontal, reference level or plane. Hence, a respective build material layer may comprise one or more peaks provided by respective elevating or elevated portions and/or may comprise one or more depressions provided by respective lowering or lowered portions. A respective reference level or plane may e.g. be defined by a horizontal plane which intersects build material layer sections, if any, having an even (non-curved) shape, i.e. defined by a horizontal plane which intersects even (non-curved) sections of the respective build material layer. Also, a respective reference level or plane may e.g. be defined by a horizontal plane which intersects an even reference build material layer, e.g. at half the height (layer thickness) of the respective reference build material layer. Hence, a respective reference level or plane may e.g. be defined by a horizontal plane which vertically subdivides an even reference build material layer into two vertically adjacent build material layer portions.

The elevated portions may be elevated by an elevating value which is determined on basis of an elevation factor (negative lowering factor), e.g. a value smaller than 1, equal to 1, or bigger than 1, and the layer thickness of the respective build material layer, particularly by multiplication of an elevation factor with the layer thickness of the respective build material layer. The lowered portions may be lowered by a lowering value which is determined on basis of a lowering factor and the layer thickness of the respective build material layer, particularly by multiplication of a lowering factor (negative elevating factor), e.g. a value smaller than 1, equal to 1, or bigger than 1, with the layer thickness of the respective build material layer.

As mentioned above, a plurality of build material layers may be applied in such a manner that each respective build material layer comprises at least one curved shape build material layer section. Thereby, the elevating or elevated portions and/or the lowering or lowered portions of respective curved shaped build material layer sections of adjacently disposed build material layers may have the same slopes. In other words, the curved shaped build material layer sections of different build material layers may have the same or similar geometric properties allowing for a parallel extension of adjacently disposed build material layers in at least one direction of extension of the respective build material layers and thus, a parallel arrangement of adjacently disposed build material layers in a vertical direction (build direction).

Respective elevating or elevated portions and/or respective lowering or lowered portions of respective curved shaped build material layer sections of adjacently disposed build material layers may particularly, have the same slopes such that a lower build material layer may engage or engages with a vertically directly adjacently disposed upper build material layer. Respective elevating or elevated portions and/or respective lowering or lowered portions of respective curved shaped build material layer sections of adjacently disposed build material layers may particularly, have the same slopes such that top side portions of elevated portions of a lower build material layer engage with bottom side portions of elevated portions of a directly adjacently applied upper build material layer in vertical direction (build direction) and/or such that bottom side portions of lowered portions of an upper build material layer engage with top side portions of lowered portions of a directly adjacently applied lower build material layer in vertical direction. All of the aforementioned aspects allow for a vertical engagement of vertically adjacently disposed build material layers and thus, allow for generating the abovementioned interlocking build material layer structure allowing for an interlocking engagement of vertically adjacently disposed build material layers.

A respective build material layer which is to be selectively irradiated and consolidated comprising at least one build material layer section having a curved shape with respect to at least one extension direction of the build material layer may be generated in different ways. As will be apparent from below, respective build material layer sections having a curved shape may be generated by concertedly changing the distance between the build material application element, i.e. particularly the free end of the build material application element being oriented towards the build plane, and the build plane, i.e. particularly the freely exposed top surface of the build plane, during a build material application process. A respective build material application element may be built as or comprise a blade-like re-coater element, for instance. A respective build material application element may also be built as or comprise a build material application unit, e.g. in the shape of an build material application head, for instance.

According to a first exemplary embodiment, a respective build material layer which is to be selectively irradiated and consolidated comprising at least one build material layer section having a curved shape with respect to at least one extension direction of the build material layer may be generated by moving a build material application element, which is configured to apply an amount of build material in the build plane so as to generate a build material layer which is to be selectively irradiated and consolidated, in a combined motion comprising at least two different motion components, i.e. two different translatory motion components, across the build plane. Thereby, a first motion component, typically a first translatory motion component, of the build material application element may be or may comprise a motion of the build material application element in a direction parallel to the build plane, i.e. typically a horizontal direction along a horizontal axis, and at least one further motion component, typically a further translatory motion component, of the build material application element may be or may comprise a motion of the build material application element in a direction not parallel to the build plane, i.e. typically a vertical direction along a vertical axis. In other words, the first translatory motion component may be superimposed by a second translatory motion component which results in a combined motion of the build material application element relative to the build plane. Thereby, the distance between the build material application element, i.e. particularly the free end of the build material application element being oriented towards the build plane, and the build plane, i.e. particularly the freely exposed top surface of the build plane, may vary while the build material application element is moved across the build plane so as to apply an amount of build material which forms a respective build material layer. This embodiment particularly, allows for generating curved sections extending in the direction (x-direction) of application of build material (coating direction).

According to a second exemplary embodiment, a respective build material layer which is to be selectively irradiated and consolidated comprising at least one build material layer section having a curved shape with respect to at least one extension direction of the build material layer may be generated by moving a build material application element, which is configured to apply an amount of build material in the build plane so as to generate a build material layer which is to be selectively irradiated and consolidated, in a combined motion comprising at least two different motion components, i.e. a translatory motion component and a rotary motion component, across the build plane. Thereby, a first motion component, typically a translatory motion component, of the build material application element may be or may comprise a motion of the build material application element in a direction parallel to the build plane, i.e. typically a horizontal direction along a horizontal axis (coating direction), and at least one further motion component, typically a rotary motion component, may be or may comprise a rotary motion, particularly a pivot motion, of the build material application element around a rotational axis, i.e. typically a horizontal axis, particularly the axis of the coating direction. In other words, a first translatory motion component may be superimposed by a second rotary motion component which results in a combined motion of the build material application element relative to the build plane. Thereby, the (vertical) distance between the build material application element, i.e. particularly the free end of the build material application element being oriented towards the build plane, and the build plane, i.e. particularly the freely exposed top surface of the build plane, may vary while the build material application element is moved across the build plane so as to apply an amount of build material which forms a respective build material layer. This embodiment particularly, allows for generating curved sections extending in a direction (y-direction) transverse to the direction of application of build material (coating direction).

In either case, respective motions of a build material application element may be implemented by a build material application element which is moveably supported in different degrees of freedom of motion which are related to respective motion components. With respect to the first exemplary embodiment, the build material application element is typically, moveably supported in at least two translatory degrees of freedom of motion, i.e. particularly in a translatory degree of freedom of motion allowing for a translatory motion in the first motion component, and a second translatory degree of freedom of motion allowing for a translatory motion in the second motion component. With respect to the second exemplary embodiment, the build material application element is typically, moveably supported in at least one translatory degree of freedom of motion, i.e. particularly in a translatory degree of freedom of motion allowing for a translatory motion in the first motion component, and in at least one rotary degree of freedom of motion, i.e. particularly in a rotary degree of freedom of motion allowing for a rotary motion in the second motion component.

Also in either case, respective guiding units or guiding elements, e.g. in the shape of guiding rails, may be provided for implementing respective motions of a build material application element in the at least two degrees of freedom of motion and motion components, respectively.

According to a third exemplary embodiment, a respective build material layer which is to be selectively irradiated and consolidated comprising at least one build material layer section having a curved shape with respect to at least one extension direction of the build material layer may be generated by a controlled, particularly oscillating, upward and downward motion of a moveably supported carrying element of a carrying unit carrying the build material layers and the three-dimensional object which is to be additively manufactured while a build material application element, which is configured to apply an amount of build material in the build plane so as to generate a build material layer which is to be selectively irradiated and consolidated, moves across the build plane. In this embodiment, the build material application element is typically, moved across the build plane in a defined (vertical) distance between the build material application element, i.e. particularly the free end of the build material application element being oriented towards the build plane, and the build plane, i.e. particularly the freely exposed top surface of the build plane. Yet, according to this exemplary embodiment, the distance between the build material application element and the build plane is changed by respective, particularly oscillating, vertical motions of the carrying element relative to the build material application element.

Any combination of at least two of the aforementioned exemplary embodiments is conceivable.

In order to assure a desired irradiation and/or consolidation of respective build material layers, particularly respective build material layer sections having a curved shape, at least one irradiation parameter, particularly the vertical focus position of the energy beam, for selectively irradiating respective build material layers is determined on basis of the curved shaped build material layer section, particularly with regard to at least one irradiation and/or consolidation criterion. In other words, the irradiation parameters - the irradiation parameters may be typically, controlled by controlling operational parameters of the irradiation unit - may be adapted to respective curved shaped build material layer sections, particularly with regard to at least one irradiation and/or consolidation criterion. A respective irradiation criterion may e.g. refer to the amount of energy (per area) input into the build material layer by means of the at least one energy beam.

A respective control of irradiation parameters may (also) be achieved by implementing a concerted motion of the irradiation unit relative to a build material layer and a respective build material layer section having a curved shape, respectively. The concerted motion may allow for keeping a constant distance between an energy beam output of the irradiation unit and the surface of the respective build material layer which is to be selectively irradiated and consolidated. Hence, a moveably supported irradiation unit may be used.

A respective consolidation criterion may e.g. refer to the consolidation behavior of the build material. The consolidation behavior of the build material may be dependent of parameters, e.g. depth, width, etc., of a melt phase (melt pool) of the build material generated when being irradiated. Respective irradiation parameters may particularly be controlled on basis of the information about the changes of the varying distance between the irradiation unit, i.e. particularly an energy beam output of the irradiation unit, and the top surface of the build material layer which is to be selectively irradiated and consolidated. This distance typically, corresponds to the length of the free energy beam extending between an energy beam output of the irradiation unit and the top surface of the build material layer which is to be selectively irradiated and consolidated.

Respective build material layers comprising at least one build material layer section having a curved shape may already be contained within the build data, e.g. slice data, on basis of which the three-dimensional object is additively manufactured. In other words, the build data on basis of which the three-dimensional object is additively manufactured may contain the at least one build material layer comprising the at least one build material layer section having a curved shape.

The invention further relates to a hard- and/or software embodied control unit for an apparatus for additively manufacturing at least one three-dimensional object by means of successive layerwise selective irradiation and consolidation of build material layers applied in the build plane of a respective apparatus by means of at least one energy beam. The control unit is configured to control the application of build material, particularly in accordance with the method described herein, in such a manner that at least one build material layer which is to be selectively irradiated and consolidated is applied in such a manner that the build material layer comprises at least one build material layer section having a curved shape with respect to at least one extension direction of the build material layer. The control unit particularly, communicates with a build material application unit comprising at least one build material application element and/or a carrying unit comprising at least one carrying element so as to concertedly change the distance between the build material application element, i.e. particularly the free end of the build material application element being oriented towards the build plane, and the build plane, i.e. particularly the freely exposed top surface of the build plane, during a build material application process, so as to allow for generating respective build material layer sections having a curved shape.

The invention further relates to an apparatus for additively manufacturing at least one three-dimensional object by means of successive layerwise selective irradiation and consolidation of build material layers applied in the build plane of the apparatus by means of at least one energy beam. The apparatus comprises or is connected with at least one control unit as specified herein.

The apparatus can be a selective laser sintering apparatus, a selective laser melting apparatus, or a selective electron beam melting apparatus, for instance. Yet, it is also conceivable that the apparatus is a binder jetting apparatus, particularly a metal binder jetting apparatus, for instance.

The apparatus comprises a number of functional and/or structural units which are operable or operated during its operation. Each functional and/or structural unit may comprise a number of functional and/or structural sub-units. Exemplary functional and/or structural units are a build material application unit which is configured to apply an amount of build material which is to be selectively irradiated and consolidated in the build plane of the apparatus so as to form a build material layer in the build plane, an irradiation unit which is configured to selectively irradiate and thereby, consolidate build material layers with at least one energy beam, a carrying unit for carrying the build material layers and the three-dimensional object which is to be additively manufactured, and a respective control unit.

All annotations regarding the method also apply to the control unit and/or the apparatus.

Exemplary embodiments of the invention are described with reference to the Fig., whereby:
- Fig. 1: shows a principle drawing of an apparatus for additively manufacturing of three-dimensional objects according to an exemplary embodiment;
- Fig. 2: shows a principle drawing of a side-view of vertically disposed build material layers according to an exemplary embodiment, and
- Fig. 3, 4: each shows a principle drawing of a build material layer according to an exemplary embodiment.

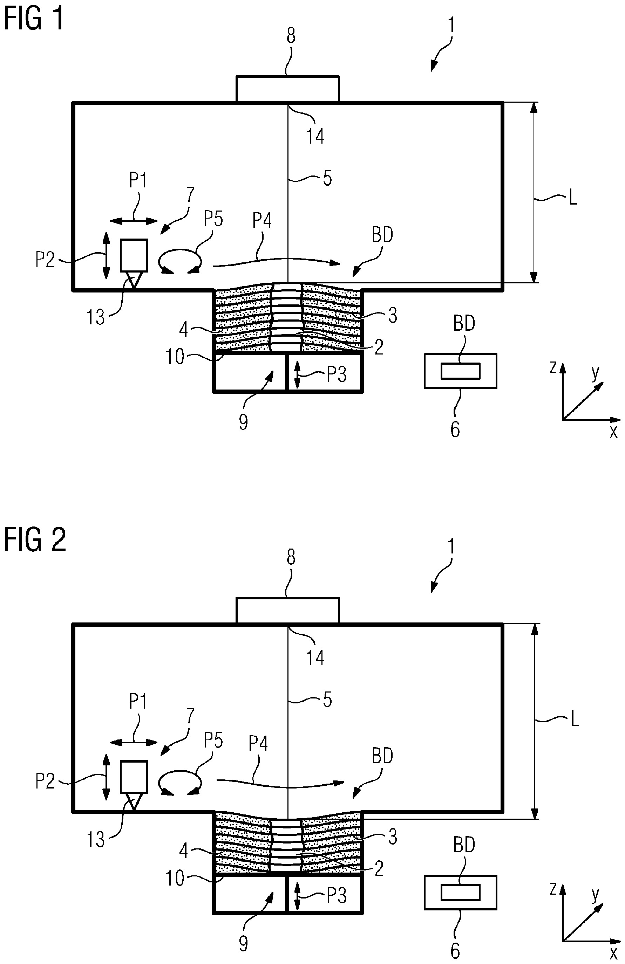

Fig. 1 shows a principle drawing of an exemplary embodiment of an apparatus 1 for additively manufacturing three-dimensional objects 2, e.g. technical components, by means of successive layerwise selective irradiation and accompanying consolidation of build material layers 3 of a powdered build material 4, e.g. a metal powder, which can be consolidated by means of at least one energy beam 5 according to an exemplary embodiment. The energy beam 5 may be an electron beam or a laser beam, for instance. The apparatus 1 may thus, be embodied as a selective electron beam melting apparatus or as a selective laser melting apparatus, for instance.

The apparatus 1 comprises a number of functional and/or structural units which are operable and operated during its operation. Each functional and/or structural unit may comprise a number of functional and/or structural sub-units. Operation of the functional and/or structural units and the apparatus 1, respectively is controlled by a hard- and/or software embodied (central) control unit 6.

Exemplary functional and/or structural units of the apparatus 1 are a build material application unit 7, an irradiation unit 8, and a carrying unit 9.

The build material application unit 7 is configured to apply an amount of build material 4 in the build plane BP of the apparatus 1 so as to generate respective build material layers 3 which are to be selectively irradiated and consolidated during additively manufacturing a three-dimensional object 2. The build material application unit 7 may comprise a build material application element 13 which may be embodied as a blade-like re-coating element, for instance. The build material application element 13 is moveably supported within the process chamber PC of the apparatus 1; the build material application element 13 may at least be moved across the build plane BP so as to apply an amount of dosed build material 4 in the build plane BP and so as to generate a respective build material layer 3 which is to be selectively irradiated and consolidated during additively manufacturing a three-dimensional object 2. The direction of application of build material 4 in the build plane BP corresponds to the x-direction. An exemplary motion of the build material application element 13 across the build plane BP is thus, indicated by double-arrow P1. A drive unit (not shown) may be assigned to the build material application unit 7 so as to generate a drive force for moving the build material application element 13.

The irradiation unit 8 is configured to selectively irradiate and thereby, consolidate respective build material layers 3 which have been applied in the build plane BP of the apparatus 1 by means of the build material application unit 7 with at least one energy beam 5. The irradiation unit 8 may comprise a beam generating unit (not shown) configured to generate the at least one energy beam 5 and a beam deflecting unit (not shown), e.g. a scanning unit, configured to deflect the at least one energy beam 5 to diverse positions within the build plane BP.

The carrying unit 9 is configured to carry the build material layers 3 and the three-dimensional object 2 which is to be additively manufactured. The carrying unit 9 comprises a carrying element 10 (carrying table) which is moveably supported in a vertical direction (z-direction). An exemplary motion of the carrying element 10 is indicated by double-arrow P3. A drive unit (not shown) may be assigned to the carrying unit 9 so as to generate a drive force for moving the carrying element 10 to diverse positions in the vertical direction.

The control unit 6 is configured to implement a method for additively manufacturing a three-dimensional object 2 by means of controlling operation of the respective functional and/or structural units of the apparatus 1. Operation of respective functional and/or structural units of the apparatus 1 comprises controlling operation of the build material application unit 7, the irradiation unit 8, and the carrying unit 9.

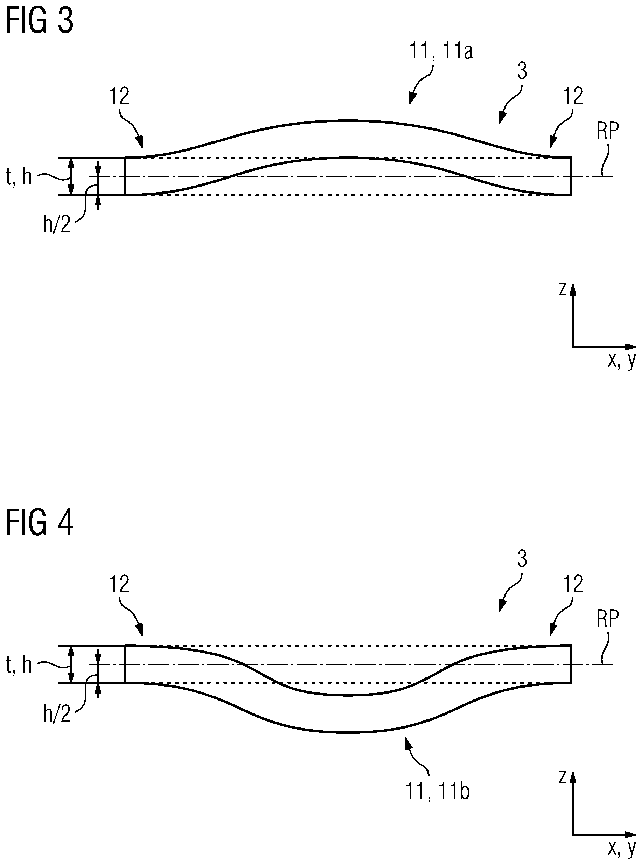

According to the method, at least one build material layer 3 which is to be selectively irradiated and consolidated is applied in such a manner that the build material layer 3 comprises at least one build material layer section 11 having a curved shape and/or curved extension with respect to at least one direction of extension, e.g. the x-direction (see particularly Fig. 3, 4), which corresponds to the direction of application of build material 4, of the build material layer 3 or the y-direction (see particularly Fig. 3, 4), which corresponds to a direction transverse to the direction of application of build material 4, of the build material layer 3. Hence, as shown in Fig. 3, 4, a build material layer 3 may comprise at least one build material layer section 11 having a curved shape or extension. The term "curved" embraces all kinds of shapes, e.g. arc or arc-like shapes, wavy or wave-like shapes, ramp or ramp-like shapes, which are elevating or elevated and/or lowering or lowered in at least one direction of extension of the respective build material layer 3. If need be, a build material layer 3 may further comprise at least one build material layer section 12 having an even shape or extension.

Respective build material layers 3 having at least one build material layer section 11 having a curved shape may already be contained within the build data BD, e.g. slice data, on basis of which the three-dimensional object 2 is additively manufactured. In other words, the build data BD on basis of which the three-dimensional object 2 is additively manufactured may contain respective build material layers 3 comprising at least one build material layer section 11 having a curved shape.

Applying the build material 4 so as to form build material layers 3 comprising at least one build material layer section 11 having a curved shape, does not (necessarily) mean that the three-dimensional object 2 which is to be additively manufactured has a curved shape since the first build material layer (bottom layer with respect to the three-dimensional object 2 which is to be additively manufactured) and - as indicated in Fig. 2 - the last build material layer (top layer with respect to the three-dimensional object 2 which is to be additively manufactured) of a plurality of build material layers 3 which are required for completing the build job for manufacturing the respective three-dimensional object 2, may each be an even build material layer 3.

As is particularly apparent from Fig. 1, 2, respective curved build material layer sections 11 of respective build material layers 3 allow for forming an interlocking build material layer structure allowing for an interlocking engagement of vertically adjacently disposed build material layers 3 which significantly improves the structural properties and mechanical properties, respectively of the three-dimensional object 2. The structural and mechanical properties, respectively are particularly improved in terms of isotropic structural and mechanical properties of the three-dimensional object 2.

As is particularly apparent from Fig. 3, 4 a respective curved shape build material layer section 11 may comprise at least one elevating or elevated portion 11a (see Fig. 3), i.e. at least one portion which elevates and/or is elevated relative to a reference level or plane RP, and/or at least one lowering or lowered portion 11b, i.e. at least one lowering or lowered portion which lowers and/or is lowered relative to the reference level or plane RP. Hence, a respective build material layer 3 may comprise one or more peaks provided by respective elevating or elevated portions 11a and/or may comprise one or more depressions provided by respective lowering or lowered portions 11b. As indicated in Fig. 3, 4, the reference level or plane RP may be defined by a horizontal plane which intersects build material layer sections 12, if any, having an even (non-curved) shape, i.e. defined by a horizontal plane which intersects even (non-curved) sections of the respective build material layer 3. As is also indicated in Fig. 3, 4, the reference level or plane RP may be defined by a horizontal plane which intersects an even reference build material layer section 12 at half the height h/2 (layer thickness t) of the respective reference build material layer 3. Hence, a respective reference plane RP may be defined by a horizontal plane which vertically subdivides an even reference build material layer (indicated with a dotted line in Fig. 3, 4) into two vertically adjacent build material layer portions.

The elevated portions 11a may be elevated by an elevating value which is determined on basis of an elevation factor (negative lowering factor) and the layer thickness t of the respective build material layer 3, particularly by multiplication of an elevation factor with the layer thickness t of the respective build material layer 3. The lowered portions 11b may be lowered by a lowering value which is determined on basis of a lowering factor and the layer thickness t of the respective build material layer 3, particularly by multiplication of a lowering factor (negative elevating factor) with the layer thickness t of the respective build material layer 3.

As is apparent from Fig. 1, 2, a plurality of build material layers 3 may be applied in such a manner that each respective build material layer 3 comprises at least one curved shape build material layer section 11. Thereby, the elevating or elevated portions 11a and/or the lowering or lowered portions 11b of respective curved shaped build material layer sections 11 of adjacently disposed build material layers 3 may have the same slopes. In other words, the curved shaped build material layer sections 11 of different build material layers may have the same or similar geometric properties allowing for a parallel extension of adjacently disposed build material layers 3 in at least one direction of extension of the respective build material layers 3 and thus, a parallel arrangement of adjacently disposed build material layers 3 in the vertical direction (z-direction).

As is further apparent from Fig. 1, 2, respective elevating or elevated portions 11a and/or respective lowering or lowered portions 11b of respective curved shaped build material layer sections 11 of adjacently disposed build material layers 3 may particularly, have the same slopes such that top side portions of elevated portions 11a of a lower build material layer 3 engage with bottom side portions of elevated portions 11a of a directly adjacently applied upper build material layer 3 in the vertical direction (z-direction) and/or such that bottom side portions of lowered portions 11b of an upper build material layer 3 engage with top side portions of lowered portions 11b of a directly adjacently applied lower build material layer 3 in the vertical direction (z-direction). All of the aforementioned aspects allow for a vertical engagement of vertically adjacently disposed build material layers 2 and thus, allow for generating an interlocking build material layer structure allowing for an interlocking engagement of vertically adjacently disposed build material layers 3.

A respective build material layer 3 comprising a curved shape build material layer section 11 may be generated in different ways, which will be explained in the following:
As a first example, a respective build material layer 3 comprising a curved shaped build material layer section 11 may be generated by moving the build material application element 13 in a combined motion comprising at least two different motion components, i.e. two different translatory motion components, across the build plane BP. Thereby, a first translatory motion component (as indicated by double-arrow P1) of the build material application element 13 is or comprises a motion of the build material application element 13 in a direction parallel to the build plane BP, i.e. in a horizontal direction along a horizontal axis (x-axis in Fig. 1, 2), and a further translatory motion component (as indicated by double-arrow P2) of the build material application element 13 is or comprises a motion of the build material application element 13 in a direction not parallel to the build plane BP, i.e. in a vertical direction along a vertical axis (z-axis in Fig. 1, 2). In other words, the first translatory motion component may be superimposed by the second translatory motion component which results in a combined motion (as indicated by curved arrow P4) of the build material application element 13 relative to the build plane BP. As is apparent from Fig. 1, 2, the distance between the build material application element 13, i.e. the free end of the build material application element 13 being oriented towards the build plane BP, and the build plane BP, i.e. the freely exposed top surface of the build plane BP, varies while the build material application element 13 is moved across the build plane BP. This example allows for generating curved sections extending in the direction of application of build material (x-direction, coating direction).

As a second example, a respective build material layer 3 having a curved shaped build material layer section 11 may be generated by moving a build material application element 13 in a combined motion comprising at least two different motion components, i.e. a translatory motion component and a rotary motion component, across the build plane BP. Thereby, a translatory motion component (as indicated by double-arrow P1) of the build material application element 13 is or comprises a motion of the build material application element 13 in a direction parallel to the build plane BP, i.e. in a horizontal direction along a horizontal axis (x-axis in Fig. 1, 2), and a further rotary motion component (as indicated by double-arrow P5) is or comprises a rotary motion, particularly a pivot motion, of the build material application element 13 around a rotational axis, i.e. the horizontal axis (x-axis in Fig. 1, 2). In other words, the translatory motion component may be superimposed by the rotary motion component which results in a combined motion of the build material application element 13 relative to the build plane BP. Thereby, the distance between the build material application element 13, i.e. the free end of the build material application element 13 being oriented towards the build plane BP, and the build plane BP, i.e. the freely exposed top surface of the build plane BP, varies while the build material application element 13 is moved across the build plane BP. This example allows for generating curved sections extending in a direction (y-direction) transverse to the direction of application of build material (x-direction, coating direction).

As is apparent from the examples, respective motions of the build material application element 13 may be implemented by a build material application element 13 which is moveably supported in different degrees of freedom of motion which are related to respective motion components. With respect to the first example, the build material application element 13 is moveably supported in two translatory degrees of freedom of motion, i.e. in the translatory degree of freedom of motion as indicated by double-arrow P1 allowing for a translatory motion in the first motion component, and the second translatory degree of freedom of motion as indicated by double-arrow P2 allowing for a translatory motion in the second motion component. With respect to the second example, the build material application element 13 is moveably supported in one translatory degree of freedom of motion, i.e. the translatory degree of freedom of motion as indicated by double-arrow P1 allowing for a translatory motion in the first motion component, and in a rotary degree of freedom of motion, i.e. in the rotary degree of freedom of motion as indicated by double-arrow P5 allowing for a rotary motion in the second motion component.

Guiding units or guiding elements (not shown), e.g. in the shape of guiding rails, may be provided for implementing respective motions of the build material application element 13 in the respective degrees of freedom of motion and motion components, respectively.

According to a third example, a respective build material layer 3 having a curved shaped build material layer section 11 may be generated by a controlled, particularly oscillating, upward and downward motion (as indicated by double-arrow P3 in Fig. 1, 2) of the carrying element 10 of the carrying element 10 while the build material application element 13 moves across the build plane BP. In this example, the build material application element 13 is moved across the build plane BP in a defined (vertical) distance between the build material application element 13, i.e. the free end of the build material application element 13 being oriented towards the build plane BP, and the build plane BP, i.e. the freely exposed top surface of the build plane BP. According to this example, the distance between the build material application element 13 and the build plane BP is changed by respective, particularly oscillating, vertical motions of the carrying element 10 relative to the build material application element 13.

Any combination(s) of the above-mentioned examples is conceivable.

In order to assure a desired irradiation and/or consolidation of respective build material layers 3, particularly respective build material layer sections 11 having a curved shape, the irradiation parameters - the irradiation parameters may be typically, controlled by controlling operational parameters of the irradiation unit 8 - may be adapted to respective curved shaped build material layer sections 11, particularly with regard to at least one irradiation and/or consolidation criterion. A respective irradiation criterion may e.g. refer to the amount of energy (per area) input into the build material layer 3 by means of the at least one energy beam 5.

A respective control of irradiation parameters may (also) be achieved by implementing a concerted motion of the irradiation unit relative to the build material layers 3 and respective build material layer sections 11 having a curved shape, respectively. The concerted motion may allow for keeping a constant distance between an energy beam output of the irradiation unit 8 and the surface of the respective build material layer 3 which is to be selectively irradiated and consolidated. Hence, a moveably supported irradiation unit 8 may be used.

A respective consolidation criterion may e.g. refer to the consolidation behavior of the build material 3. The consolidation behavior of the build material 3 may be dependent of parameters, e.g. depth, width, etc., of a melt phase (melt pool) of the build material 3 generated when being irradiated. Respective irradiation parameters may particularly be controlled on basis of the information about the changes of the varying distance between the irradiation unit 8, i.e. particularly an energy beam output 14 of the irradiation unit 8, and the top surface of the build material layer 3 which is to be selectively irradiated and consolidated which may be contained within the build data BD. This distance typically, corresponds to the length L of the free energy beam 5 extending between an energy beam output 14 of the irradiation unit 8 and the top surface of the build material layer 3 which is to be selectively irradiated and consolidated.

## Claims

1. Method for additively manufacturing at least one three-dimensional object (2) by means of successive layerwise selective irradiation and consolidation of build material layers (3) applied in a build plane (BP) of an apparatus (1) for additively manufacturing three-dimensional objects (2) by means of at least one energy beam (5), **wherein** at least one build material layer (3) which is to be selectively irradiated and consolidated by means of the energy beam (5) comprises at least one build material layer section (11) having a curved shape with respect to at least one extension direction of the build material layer (3).

2. Method according to Claim 1, **wherein** the or an at least one curved shape build material layer section (11) comprises at least one elevating or elevated portion (11a), particularly at least one portion which elevates and/or is elevated relative to a reference level or plane (RP), and/or at least one lowering or lowered portion (11b), particularly at least one lowering or lowered portion which lowers and/or is lowered relative to the reference level or plane (RP).

3. Method according to Claim 2, **wherein** the elevated portions (11a) are elevated by an elevating value which is determined on basis of an elevation factor and the layer thickness (t) of the respective build material layer (3), particularly by multiplication of an elevation factor with the layer thickness (t) of the respective build material layer (3); and/or
the lowered portions (11b) are lowered by a lowering value which is determined on basis of a lowering factor and the layer thickness (t) of the respective build material layer (3), particularly by multiplication of a lowering factor with the layer thickness (t) of the respective build material layer (3).

4. Method according to any of the preceding Claims, **wherein** a plurality of build material layers (11) are applied in such a manner that the respective build material layers (3) comprise at least one curved shape build material layer section (11), whereby the elevating or elevated portions (11a) and/or the lowering or lowered portions (11b) of respective curved shaped build material layer sections (11) of adjacently disposed build material layers (3) have the same slopes.

5. Method according to Claim 4, **wherein** a plurality of build material layers (3) are applied in such a manner that the respective build material layers (3) comprise at least one curved shape build material layer section (11), whereby the elevating or elevated portions (11a) and/or the lowering or lowered portions (11b) of respective curved shaped build material layer sections (11) of adjacently disposed build material layers (3) have the same slopes such that a lower build material layer (3) engages with a vertically directly adjacently disposed upper build material layer (3).

6. Method according to Claim 4 or 5, **wherein** a plurality of build material layers (3) are applied in such a manner that the respective build material layers (3) comprise at least one curved shape build material layer section (11), whereby the elevating or elevated portions (11a) and/or the lowering or lowered portions (11b) of respective curved shaped build material layer sections (11) of adjacently disposed build material layers (3) have the same slopes
such that top side portions of elevated portions (11a) of a lower build material layer (3) engage with bottom side portions of elevated portions (11a) of a directly adjacently applied upper build material layer (3) in vertical direction and/or
such that bottom side portions of lowered portions (11b) of an upper build material layer (3) engage with top side portions of lowered portions (11b) of a directly adjacently applied lower build material layer (3) in a vertical direction.

7. Method according to any of the preceding Claim, **wherein** build material layer sections (11) having a curved shape are generated by concertedly changing the distance between a build material application element (13), which is configured to apply an amount of build material (4) in the build plane (BP) so as to generate a build material layer (3) which is to be selectively irradiated and consolidated, particularly the free end of the build material application element (13) being oriented towards the build plane (BP), and the build plane (BP), particularly the freely exposed top surface of the build plane (BP), during a build material application process.

8. Method according to any of the preceding Claims, **wherein** the at least one build material layer (3) which is to be selectively irradiated and consolidated comprising at least one build material layer section (11) having a curved shape with respect to at least one extension direction of the build material layer (3) is generated by moving a build material application element (13), which is configured to apply an amount of build material (4) in the build plane (BP) so as to generate a build material layer (3) which is to be selectively irradiated and consolidated, in a combined motion in at least two different motion components across the build plane (BP), whereby a first motion component is or comprises a motion of the build material application element (13) in a direction parallel to the build plane (BP) and at least one further motion component is or comprises a motion of the build material application element (13) in a direction not parallel to the build plane (BP).

9. Method according to any of the preceding Claims, **wherein** the at least one build material layer (3) which is to be selectively irradiated and consolidated comprising at least one build material layer section (11) having a curved shape with respect to at least one extension direction of the build material layer (3) is generated by moving a build material application element (13), which is configured to apply an amount of build material (4) in the build plane (BP) so as to generate a build material layer (3) which is to be selectively irradiated and consolidated, in a combined motion defined by at least two different motion components across the build plane (BP), whereby a first motion component is or comprises a motion of the build material application element (13) in a direction parallel to the build plane (BP) and at least one further motion component is or comprises a rotary motion, particularly a pivot motion, of the build material application (13) element around a rotary axis.

10. Method according to any of the preceding Claims, **wherein** the at least one build material layer (3) which is to be selectively irradiated and consolidated comprising at least one build material layer section (119 having a curved shape with respect to at least one extension direction of the build material layer (3) is generated by a controlled, particularly oscillating, upward and downward motion of a moveably supported carrying element (10) carrying the build material layers (3) while a build material application element (13) moves across the build plane (BP).

11. Method according to any of the preceding Claims, **wherein** at least one irradiation parameter, particularly the vertical focus position of the energy beam (5), for selectively irradiating respective build material layers (3) is determined on basis of the curved shaped build material layer section (11), particularly with regard to at least one irradiation and/or consolidation criterion.

12. Method according to any of the preceding Claims, **wherein** the build data (BD) on basis of which the three-dimensional object (2) is additively manufactured contains the at least one build material layer (3) comprising the at least one build material layer section (11) having a curved shape.

13. Control unit (6) for an apparatus (1) for additively manufacturing at least one three-dimensional object (2) by means of successive layerwise selective irradiation and consolidation of build material layers (3) applied in a build plane (BP) of a respective apparatus (1), the control unit (6) being configured to control the application of build material (4), particularly in accordance with the method according to any of the preceding Claims, in such a manner that at least one build material layer (3) which is to be selectively irradiated and consolidated is applied in such a manner that the build material layer (3) comprises at least one build material layer section (11) having a curved shape with respect to at least one extension direction of the build material layer (3).

14. Apparatus (1) for additively manufacturing at least one three-dimensional object (2) by means of successive layerwise selective irradiation and consolidation of layers of build material (3) applied in the build plane (BP) of the apparatus (1) by means of at least one energy beam (5), comprising a control unit (6) according to Claim 13.
